# EUROPÄISCHE PATENTSCHRIFT

(11) **EP 3 247 662 B1**
(45) Veröffentlichungstag und Bekanntmachung des Hinweises auf die Patenterteilung: **01.07.2020**
(21) Anmeldenummer: 16700749.1
(22) Anmeldetag: 15.01.2016
(51) Int. Cl.: B65H 3/08, B65G 59/04

(54) **VERFAHREN UND VORRICHTUNG ZUM SEPARIEREN EINZELNER ZWISCHENLAGEN VON EINEM ZWISCHENLAGENSTAPEL**
METHOD AND APPARATUS FOR SEPARATING INDIVIDUAL INTERMEDIATE LAYERS FROM A STACK OF INTERMEDIATE LAYERS
PROCÉDÉ ET DISPOSITIF PERMETTANT DE SÉPARER DES COUCHES INTERMÉDIAIRES INDIVIDUELLES D'UNE PILE DE COUCHES INTERMÉDIAIRES

(30) Priorität: 19.01.2015 DE 102015200733
(43) Veröffentlichungstag der Anmeldung: 29.11.2017
(73) Patentinhaber: Krones Aktiengesellschaft, 93073 Neutraubling (DE)
(72) Erfinder: ZEINER, Peter, 93073 Neutraubling (DE); WESTERMEIER, Christian, 93073 Neutraubling (DE)
(74) Vertreter: Benninger, Johannes
(86) Internationale Anmeldenummer: PCT/EP2016/050784
(87) Internationale Veröffentlichungsnummer: WO 2016/116369

(56) Entgegenhaltungen:
- EP-A1- 2 399 849
- EP-A1- 2 716 584
- EP-A2- 0 339 265
- EP-A2- 0 351 205
- DE-A1-102007 024 771
- DE-C- 134 708
- DE-C- 138 005
- JP-A- S6 175 747
- JP-A- S6 175 748
- US-A1- 2006 071 353

## Beschreibung

Die vorliegende Erfindung betrifft ein Verfahren zum Separieren einzelner Zwischenlagen von einem Zwischenlagenstapel.

Aus dem Stand der Technik sind bereits automatisierte Palettiervorrichtungen bekannt, welche mehrere Artikel auf einer Palette anordnen und die Artikel der jeweiligen Palette abschließend mittels Folie umhüllen.

Bei derartigen Paletten sind vorzugsweise mehrere Lagen an Artikeln auf der jeweiligen Palette übereinander angeordnet, um eine große Anzahl an Artikeln auf der jeweiligen Palette platzieren zu können. Die Artikel können beispielsweise durch Gebinde mit mehreren Getränkebehältnissen ausgebildet sein. Derartige Artikel besitzen häufig eine komplexe Geometrie, so dass eine Stapelung mit mehreren Lagen nicht immer ohne hiermit einhergehender Probleme hinsichtlich der Stabilität der gesamten Palettenzusammenstellung möglich ist. Insbesondere während des Transportes der Palette ist es notwendig, eine gewisse Stabilität für die Palettenzusammenstellung gewährleisten zu können, um ein Kippen der jeweiligen Artikel mit Gewissheit ausschließen zu können.

Um die Stabilität der Palettenzusammenstellung zu erhöhen bzw. um eine ausreichende Stabilität für die Palettenzusammenstellung gewährleisten zu können, ist aus dem Stand der Technik bekannt, für aufeinanderstehende Artikel sog. Zwischenlagen vorzusehen. Derartige Zwischenlagen können sich zumindest näherungsweise über die gesamte Palettenbreite erstrecken, so dass sämtliche Artikel auf einer derartigen Zwischenlage aufstehen. Bekannte Zwischenlagen sind beispielsweise aus Papier, Kartonage, Pappe, Wellpappe oder aus ähnlichen Materialien gebildet. Aufgrund ihrer Steifigkeit wird mittels der Zwischenlagen jeweils eine stabile Aufstandsfläche für übereinander angeordnete Artikellagen bereitgestellt. Auch kann es sein, dass für eine Ebene der Palette mehrere Zwischenlagen bereitgestellt werden bzw. dass eine Ebene der Palette durch mehrere Zwischenlagen gebildet wird, auf welchen die Artikel aufstehen.

Für automatisierte Prozesse der Palettierung ist es notwendig, dass Zwischenlagen schnell und in großer Anzahl zur Verfügung stehen. Bekannt sind daher Zwischenlagenstapel, die eine Vielzahl von derartigen Zwischenlagen umfassen.

Bevor die jeweiligen Zwischenlagen auf der Palette platziert werden, ist es notwendig, einzelne Zwischenlagen vom Stapel abzutrennen bzw. die Zwischenlagen zu vereinzeln. Hierzu sind aus dem Stand der Technik eine Vielzahl von Vorrichtungen bekannt, mittels welcher ein derartiges Abtrennen einzelner Zwischenlagen von einem Stapel erfolgt.

Beispielsweise offenbart eine derartige Vorrichtung die DE 10 2004 031 301 A1. Bei Vorrichtung der DE-Patentanmeldung wird ein Stapel an Zwischenlagen zur Verfügung gestellt und über einen Greifer mit Saugnäpfen aufgenommen. Anschließend wird die Zwischenlage durch den Greifer angehoben und auf der jeweiligen Palette abgesetzt. Nach Absetzen wird der Greifer zurückgefahren, um die nächste Zwischenlage abzuholen. DE 138005C offenbart ein Verfahren zum Separieren einzelner Zwischenlagen von einem Zwischenlagenstapel, umfassend folgende Schritte:
- Erfassen einer zuoberst auf dem Zwischenlagenstapel angeordneten Zwischenlage durch mindestens eine Saug- und/oder Greifeinrichtung,
- Anheben einer Außenkante der erfassten Zwischenlage durch die mindestens eine Saug-und/oder Greifeinrichtung, wobei die Zwischenlage weiterhin mit dem Zwischenlagenstapel in Oberflächenkontakt bleibt,
- Abziehen der angehobenen Zwischenlage vom Zwischenlagenstapel durch eine Bewegung der mindestens einen Saug- und/oder Greifeinrichtung in Richtung eines Zielortes, wobei die Zwischenlage ihren Oberflächenkontakt zum Zwischenlagenstapel verliert, wobei
- die mindestens eine Saug- und/oder Greifeinrichtung zeitlich nach Erfassen der Zwischenlage und zeitlich vor Abziehen der Zwischenlage einen Versatz um eine bestimmte Strecke erfährt und sich hierbei in Gegenrichtung des Zielortes bewegt, wobei
- die mindestens eine Saug- und/oder Greifeinrichtung zum Anheben der Außenkante der Zwischenlage um eine zumindest näherungsweise horizontal orientierte Achse gedreht wird bei welchem Verfahren vorgesehen ist, dass
- zeitlich vor Anheben der Außenkante wenigstens zwei Anschläge zur vorder- und rückbündigen Ausrichtung mehrerer zuoberst auf dem Zwischenlagenstapel angeordneter Zwischenlagen zugestellt werden und hierbei mit gegenüberliegenden Außenkanten der Zwischenlagen in Oberflächenkontakt treten, dass
- wenigstens ein zur rückbündigen Ausrichtung der Zwischenlagen vorgesehener Anschlag während des Anhebens der Außenkante in Oberflächenkontakt mit einer Rückkante der erfassten Zwischenlage bleibt und dass
- ein zur vorderbündigen Ausrichtung der Zwischenlagen vorgesehener Anschlag den Zwischenlagenstapel in vertikaler Richtung überragt, so dass die jeweilige Zwischenlage während des Abziehens gleitend über den zur vorderbündigen Ausrichtung vorgesehenen Anschlag hinwegbewegt wird.

Die Praxis hat gezeigt, dass die Zwischenlagen des Stapels aneinander anhaften, so dass ein Abtrennen einzelner Zwischenlagen aus dem Stapel häufig mit Problemen einhergeht. Als Ursache für das Anhaften der einzelnen Zwischenlagen aneinander kann beispielsweise eine elektrostatische Adhäsion oder ein mechanisches Verhaken der Zwischenlagen genannt werden.

Kommt es während eines Palettierungsprozesses zu Problemen bei der Abtrennung einzelner Zwischenlagen vom Stapel, so muss der gesamte Prozess gestoppt werden, woraus unerwünschte Verzögerungen bei der Palettierung resultieren. Insbesondere bei Abheben einzelner Zwischenlagen vom Stapel mit hoher Geschwindigkeit können derartige Problem auftreten, da einzelne Zwischenlagen aufgrund von elektrostatischer Adhäsion aneinander haften bleiben. Ein effektives Separieren einzelner Zwischenlagen vom Stapel ist auch aus diesem Grunde wünschenswert, um eine Palettierung mit möglichst hohem Durchsatz durchführen zu können. Wünschenswert sind daher Vorrichtungen und Verfahren, welche ein sicheres Abtrennen einzelner Zwischenlagen ohne Probleme und zeitoptimiert ermöglichen.

Aufgabe der Erfindung ist daher ein Verfahren zur Verfügung zu stellen, welches ein schnelles, zumindest weitgehend sicheres und einfaches Abtrennen einzelner Zwischenlagen von einem Zwischenlagenstapel ermöglicht. Weiter soll das Verfahren einfach durchführbar sein.

Die obigen Aufgaben werden durch ein Verfahren gelöst, welches die Merkmale des Anspruchs 1 aufweist. Weitere vorteilhafte Ausgestaltungen werden durch die Unteransprüche beschrieben.

Die Erfindung betrifft ein Verfahren zum Separieren einzelner Zwischenlagen von einem Zwischenlagenstapel. Der Zwischenlagenstapel kann sinnvollerweise eine Vielzahl von Zwischenlagen umfassen, die ggf. auf einer Palette angeordnet sind. Die Zwischenlagen des Zwischenlagenstapels können eine zumindest näherungsweise identische Geometrie bzw. eine zumindest näherungsweise identische Dimensionierung besitzen.

Im Rahmen eines ersten Verfahrensschrittes wird eine zuoberst auf dem Zwischenlagenstapel angeordnete Zwischenlage durch mindestens eine Saug- und/oder Greifeinrichtung erfasst. Die mindestens eine Saug- und/oder Greifeinrichtung kann hierzu über dem Zwischenstapel positioniert werden bzw. über den Zwischenlagenstapel verfahren werden und zeitlich hierauf folgend auf den Zwischenlagenstapel abgesenkt werden, wobei sie mit der jeweiligen zuoberst auf dem Zwischenlagenstapel angeordneten Zwischenlage in Kontakt tritt. Insbesondere haben sich in der Praxis Ausführungsformen bewährt, bei welchen die mindestens eine Saug- und/oder Greifeinrichtung einen oder mehrere Saugköpfe besitzt, die bei Absenken der Saug-und/oder Greifeinrichtung auf den Zwischenlagenstapel bzw. auf die zuoberst auf dem Zwischenlagenstapel angeordnete Zwischenlage aufgesetzt werden. Zeitlich nachdem die mindestens eine Saug- und/oder Greifeinrichtung bzw. die ein oder mehreren Saugköpfe auf den Zwischenlagenstapel aufgesetzt wird, kann die zuoberst auf dem Zwischenlagenstapel angeordnete Zwischenlage durch die mindestens eine Saug-und/oder Greifeinrichtung bzw. durch die ein oder mehreren Saugköpfe pneumatisch und via Unterdruck erfasst werden. Eine hiermit einhergehende Fixierung der Zwischenlage an der mindestens einen Saug- und/oder Greifeinrichtung kann hierauf bis zu einer Überführung der Zwischenlage an einen nachfolgend noch beschriebenen Zielort beibehalten werden. Ausführungsformen, bei welchen die zuoberst auf dem Zwischenlagenstapel angeordnete Zwischenlage pneumatisch und via Unterdruck erfasst wird, haben sich bewährt, um schnell und einfach eine Fixierung der Zwischenlage an der Saug- und/oder Greifeinrichtung herzustellen.

In einem weiteren Verfahrensschritt, welcher zeitlich auf das Erfassen der zuoberst auf dem Zwischenlagenstapel angeordneten Zwischenlage durch die mindestens eine Saug- und/oder Greifeinrichtung folgt, wird eine Außenkante bzw. Vorderkante der erfassten Zwischenlage durch die Saug- und/oder Greifeinrichtung angehoben. Hierbei bleibt die Zwischenlage weiterhin mit dem Zwischenlagenstapel in Oberflächenkontakt. In besonders bevorzugten Ausführungsformen besitzen die Zwischenlagen gegenüberliegende quadratische Breitseitenflächen, wobei zwei gegenüberliegende Außenkanten sowie eine Vorderkante und eine Rückkante den Umfangsverlauf ausbilden. Die Außenkante, welche durch die mindestens eine Saug- und/oder Greifeinrichtung angehoben wird, kann als Vorderkante der Zwischenlage ausgebildet sein und sich näher am Zielort befinden als die Rückkante. Die Rückkante kann während und nach dem Anheben der Außenkante weiterhin auf dem Zwischenlagenstapel aufliegen. Die von der mindestens einen Saug- und/oder Greifeinrichtung erfasste Zwischenlage kann sich durch das Anheben der Außenkante zumindest bereichsweise konvex verformen bzw. sich zumindest bereichsweise krümmen. Beispielsweise kann es sein, dass die mindestens eine Saug- und/oder Greifeinrichtung zum Anheben der Außenkante der erfassten Zwischenlage lediglich in Richtung weg des Zwischenlagenstapels und nach oben bewegt wird. Für besonders bevorzugte Ausführungsformen ist auch denkbar, dass die mindestens eine Saug- und/oder Greifeinrichtung zum Anheben der Außenkante der erfassten Zwischenlage um eine zumindest näherungsweise horizontal orientierte Achse gedreht wird.

Nachfolgend wird die angehobene Zwischenlage vom Zwischenlagenstapel durch eine Bewegung der mindestens einen Saug- und/oder Greifeinrichtung in Richtung eines Zielortes abgezogen und ggf. an den Zielort überführt, wobei die Zwischenlage ihren Oberflächenkontakt zum Zwischenlagenstapel verliert. Beispielsweise kann es sein, dass im Bereich des Zielortes eine Palette positioniert ist, wobei die Zwischenlage durch die mindestens eine Saug- und/oder Greifeinrichtung auf eine Vielzahl von Artikeln aufgelegt wird und hierbei eine Standfläche für weitere Artikel ausbildet. Bei den Artikeln kann es sich beispielsweise um Flaschen bzw. um Getränkebehältnisse handeln. Mehrere der Flaschen bzw. Getränkebehältnisse können zu einem Gebinde zusammengefasst sein.

In weiteren denkbaren Ausführungsformen kann im Bereich des Zielortes beispielsweise ein Übergabetisch bzw. Auflagetisch mit horizontaler Auflagefläche ausgebildet sein, auf welchem die Zwischenlage positioniert wird. Denkbar ist auch, dass die Vorrichtung ein oder mehrere Klemmelemente umfasst, welche Klemmelemente die Zwischenlage von der Saug-und/oder Greifeinrichtung entgegennehmen und auf der horizontalen Auflagefläche des Übergabetisches platzieren und insbesondere auf die horizontale Auflagefläche des Übergabetisches ziehen. Vom Übergabetisch bzw. von der horizontalen Auflagefläche des Übergabetisches kann die Zwischenlage von einer Handhabungseinrichtung entgegengenommen werden und auf einer jeweiligen durch Artikel gebildeten Ebene der Palette abgesetzt werden.

Bei Abziehen der Zwischenlage vom Zwischenlagenstapel kann die Saug-und/oder Greifeinrichtung horizontal bewegt werden. Insbesondere kann sich die Saug-und/oder Greifeinrichtung bei Abziehen der bereits angehobenen Zwischenlage horizontal bewegen, ohne vertikal angehoben und/oder vertikal abgesenkt zu werden. Sofern die mindestens eine Saug- und/oder Greifeinrichtung zum Anheben der Außenkante der Zwischenlage gedreht wird, kann die mindestens eine Saug- und/oder Greifeinrichtung bei Abziehen der Zwischenlage vom Zwischenlagenstapel ihre nach Anheben der Außenkante der Zwischenlage eingenommene Drehposition beibehalten. Ein Rückdrehen der Saug- und/oder Greifeinrichtung kann erfolgen, nachdem die jeweilige Zwischenlage von der Saug- und/oder Greifeinrichtung an ihren Zielort überführt wurde bzw. um die jeweilige Zwischenlage ggf. an Klemmelemente weiterzureichen.

Weiterhin ist vorgesehen, dass die mindestens eine Saug- und/oder Greifeinrichtung zeitlich nach Erfassen der Zwischenlage und zeitlich vor Abziehen der Zwischenlage einen Versatz um eine bestimmte Strecke erfährt und sich hierbei in Gegenrichtung des Zielortes bewegt. Hierbei kann ein Anhaften der zuoberst auf dem Zwischenlagenstapel angeordneten Zwischenlage an weiteren Zwischenlagen gelöst werden oder das Risiko eines Anhaftens der zuoberst auf dem Zwischenlagenstapel angeordneten Zwischenlage an weiteren Zwischenlagen zumindest reduziert werden. Die mindestens eine Saug- und/oder Greifeinrichtung kann bei Versatz mit mindestens einer Richtungskomponente bewegt werden, die eine horizontale Orientierung besitzt und vom Zielort weg weist bzw. in Gegenrichtung des Zielortes weist. Die mindestens eine Saug-und/oder Greifeinrichtung kann bei Versatz in Richtung einer Rückkante der zuoberst auf dem Zwischenlagenstapel angeordneten Zwischenlage bewegt werden. Der Betrag der Strecke, um welchen die mindestens eine Saug- und/oder Greifeinrichtung versetzt wird bzw. einen Versatz erfährt, kann geringer bzw. wesentlich geringer als der Betrag der Längserstreckung der zuoberst auf dem Zwischenlagenstapel angeordneten Zwischenlage ausgebildet sein. Insbesondere kann der Betrag der Strecke, um welchen die mindestens eine Saug- und/oder Greifeinrichtung versetzt wird bzw. einen Versatz erfährt, durch weniger als ein Drittel des Betrages der Längserstreckung der zuoberst auf dem Zwischenlagenstapel angeordneten Zwischenlage ausgebildet sein.

Weiterhin ist vorgesehen, dass die Saug-und/oder Greifeinrichtung zum Anheben der Außenkante der Zwischenlage um eine zumindest näherungsweise horizontal orientierte Achse gedreht wird. Die zumindest näherungsweise horizontal orientierte Achse kann als physische Achse ausgebildet sein, wobei das Drehen der Saug- und/oder Greifeinrichtung über einen Aktor erfolgt, der mit einer Steuerungseinrichtung in Verbindung steht. Die horizontal orientierte Achse kann zumindest näherungsweise lotrecht zu einer Bewegungsrichtung orientiert sein, welcher die mindestens eine Saug- und/oder Greifeinrichtung bei ihrem Versatz folgt.

Weiterhin ist vorgesehen, dass die mindestens eine Saug- und/oder Greifeinrichtung bei Anheben einer Außenkante der erfassten Zwischenlage in Richtung nach oben vom Zwischenlagenstapel weg bewegt wird. Die mindestens eine Saug- und/oder Greifeinrichtung kann hierzu mit einem oder mehreren Aktoren in Verbindung stehen, die an die Steuerungseinrichtung gekoppelt sind. Eine Bewegung der mindestens einen Saug- und/oder Greifeinrichtung in Richtung nach oben und weg vom Zwischenlagenstapel kann somit über die Steuerungseinrichtung vorgegeben werden.

Weiterhin ist vorgesehen, dass das Drehen der mindestens einen Saug- und/oder Greifeinrichtung, der Versatz der Saug- und/oder Greifeinrichtung und/oder die Bewegung der mindestens einen Saug- und/oder Greifeinrichtung in Richtung nach oben sich zeitlich überschneiden, so dass die mindestens eine Saug- und/oder Greifeinrichtung bei Anheben der erfassten Zwischenlage einer Bewegungsbahn mit nicht kreisrundem Verlauf folgt. Derartige Ausführungsformen haben sich bewährt, um die zuoberst auf dem Zwischenlagenstapel angeordnete Zwischenlage von weiteren Zwischenlagen des Zwischenlagenstapels effektiv zu trennen.

Insbesondere haben sich in der Praxis Ausführungsformen bewährt, bei welchen die mindestens eine Saug- und/oder Greifeinrichtung nach Erfassen der zuoberst auf dem Zwischenlagenstapel angeordneten Zwischenlage zeitsynchron gedreht und nach oben angehoben wird und zudem zeitsynchron einen Versatz in Gegenrichtung des Zielortes erfährt. Hat die mindestens eine Saug- und/oder Greifeinrichtung eine bestimmte Drehposition eingenommen und wurde die Saug- und/oder Greifeinrichtung um eine bestimmte Strecke in Gegenrichtung des Zielortes versetzt, kann es sein, dass die mindestens eine Saug- und/oder Greifeinrichtung weiter in Richtung nach oben angehoben wird, jedoch nicht weiter gedreht wird und keine weitere Bewegung in Gegenrichtung des Zielortes erfährt. Das weitere Anheben der mindestens einen Saug-und/oder Greifeinrichtung nach oben kann in vertikaler Richtung erfolgen, bis die mindestens eine Saug- und/oder Greifeinrichtung ein vorgegebenes Höhenniveau erreicht. Zeitlich nach Erreichen des vorgegebenen Höhenniveaus kann die angehobene Zwischenlage, wie vorhergehend erwähnt, über die mindestens eine Saug- und/oder Greifeinrichtung vom Zwischenlagenstapel abgezogen werden und hierbei ihren Oberflächenkontakt zum Zwischenlagenstapel vollständig verlieren.

Weiterhin ist vorgesehen, dass zeitlich vor Erfassen der zuoberst auf dem Zwischenlagenstapel angeordneten Zwischenlage wenigstens zwei Anschläge zur vorder- und rückbündigen Ausrichtung mehrerer zuoberst auf dem Zwischenlagenstapel angeordneter Zwischenlagen zugestellt werden und hierbei mit gegenüberliegenden Außenkanten der Zwischenlagen in Oberflächenkontakt treten. Die Längsachsen der wenigstens zwei Anschläge können sich vor, während und nach einer Zustellbewegung parallel zur horizontalen Achse erstrecken, um welche die mindestens eine Saug- und/oder Greifeinrichtung ggf. gedreht werden kann. Sind mehrere Zwischenlagenstapel, von welchen Zwischenlagen separiert werden, benachbart aufgestellt, so können ein zur vorderbündigen Ausrichtung von Zwischenlagen und ein zur rückbündigen Ausrichtung von Zwischenlagen vorgesehener Anschlag jeweils mit Zwischenlagen eines ersten Zwischenlagenstapels und mit Zwischenlagen eines zweiten Zwischenlagenstapels in Kontakt treten. Die Zustellbewegung der wenigstens zwei Anschläge kann über einen oder mehrere Aktoren bewirkt werden, die an eine Steuerungseinrichtung gekoppelt sind. Somit kann eine Steuerungseinrichtung ggf. eine Zustellbewegung der wenigstens zwei Anschläge bewirken.

Weiterhin ist vorgesehen, dass wenigstens ein zur rückbündigen Ausrichtung der Zwischenlagen vorgesehener Anschlag während des Anhebens der Außenkante zugestellt bleibt bzw. in Oberflächenkontakt mit einer Rückkante der erfassten Zwischenlage bleibt. Da die mindestens eine Saug- und/oder Greifeinrichtung erfindungsgemäß einen Versatz ausführt und sich hierbei in Gegenrichtung des Zielortes bewegt, kann die erfasste Zwischenlage bei Versatz am zur rückbündigen Ausrichtung vorgesehenen Anschlag anstehen und durch den Versatz konvex verformt werden. Ein leichteres Lösen der zuoberst auf dem Zwischenlagenstapel angeordneten Zwischenlagen von weiteren Zwischenlagen wird hierdurch ermöglicht.

Weiterhin ist vorgesehen, dass ein zur vorderbündigen Ausrichtung der Zwischenlagen vorgesehener Anschlag den Zwischenlagenstapel in vertikaler Richtung überragt, so dass die jeweilige Zwischenlage während des Abziehens gleitend über den zur vorderbündigen Ausrichtung vorgesehenen Anschlag hinwegbewegt wird. Der zur vorderbündigen Ausrichtung vorgesehene Anschlag kann die jeweilige Zwischenlage, welche vom Zwischenlagenstapel abgezogen wird, während ihrer Bewegung in Richtung des Zielortes stützen.

Zudem kann vorgesehen sein, dass die mindestens eine Saug- und/oder Greifeinrichtung die zuoberst auf dem Zwischenlagenstapel angeordnete Zwischenlage pneumatisch erfasst. Hierzu kann die mindestens eine Saug- und/oder Greifeinrichtung über einen oder mehrere bereits erwähnte Saugköpfe verfügen, welche die jeweilige zuoberst auf dem Zwischenlagenstapel angeordnete Zwischenlage via Unterdruck an der Saug- und/oder Greifeinrichtung fixieren. Derartige Ausführungsformen haben sich bewährt, um schnell und unkompliziert eine Fixierung einer Zwischenlage an der mindestens einen Saug- und/oder Greifeinrichtung herstellen zu können.

Vorstellbar ist darüber hinaus, dass wenigstens zwei Saug- und/oder Greifeinrichtungen vorhanden sind, die jeweils eine zuoberst auf einem jeweils zugeordneten Zwischenlagenstapel angeordnete Zwischenlage erfassen, nachfolgend zumindest näherungsweise zeitsynchron jeweils einen Versatz erfahren und sich hierbei jeweils mit bestimmter Strecke in Gegenrichtung des Zielortes bewegen. Die Zwischenlagen können hierbei als Halblagen ausgebildet sein, wobei zwei Halblagen eine Ebene für Artikel auf der jeweiligen Palette bereitstellen. Weiter können die mindestens zwei Saug- und/oder Greifeinrichtungen ihre erfassten Zwischenlagen zumindest näherungsweise zeitsynchron vom jeweiligen Zwischenlagenstapel abziehen und in Richtung des Zielortes bewegen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht einer Ausführungsform einer Vorrichtung und verdeutlicht einen ersten Schritt, wie er bei denkbaren Ausführungsformen des erfindungsgemäßen Verfahrens vorliegen kann;
Figur 2 zeigt die Ausführungsform einer Vorrichtung aus Figur 1 und verdeutlicht einen weiteren Schritt einer Ausführungsform eines erfindungsgemäßen Verfahrens;
Figur 3 zeigt die Ausführungsform einer Vorrichtung aus den Figuren 1 und 2 und verdeutlicht einen weiteren Schritt einer Ausführungsform eines erfindungsgemäßen Verfahrens;
Figur 4 zeigt die Ausführungsform einer Vorrichtung aus den Figuren 1 bis 3 und verdeutlicht einen weiteren Schritt einer Ausführungsform eines erfindungsgemäßen Verfahrens;
Figur 5 zeigt die Ausführungsform einer Vorrichtung aus den Figuren 1 bis 4 und verdeutlicht einen weiteren Schritt einer Ausführungsform eines erfindungsgemäßen Verfahrens;
Figur 6 zeigt die Ausführungsform einer Vorrichtung aus den Figuren 1 bis 5 und verdeutlicht einen weiteren Schritt einer Ausführungsform eines erfindungsgemäßen Verfahrens;
Figur 7 zeigt die Ausführungsform einer Vorrichtung aus den Figuren 1 bis 6 und verdeutlicht einen weiteren Schritt einer Ausführungsform eines erfindungsgemäßen Verfahrens;
Figur 8 zeigt die Ausführungsform einer Vorrichtung aus den Figuren 1 bis 7 und verdeutlicht einen weiteren Schritt einer Ausführungsform eines erfindungsgemäßen Verfahrens;
Figur 9 zeigt die Ausführungsform einer Vorrichtung aus den Figuren 1 bis 8 und verdeutlicht einen weiteren Schritt einer Ausführungsform eines erfindungsgemäßen Verfahrens;
Figur 10 zeigt die Ausführungsform einer Vorrichtung aus den Figuren 1 bis 9 und verdeutlicht einen weiteren Schritt einer Ausführungsform eines erfindungsgemäßen Verfahrens.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

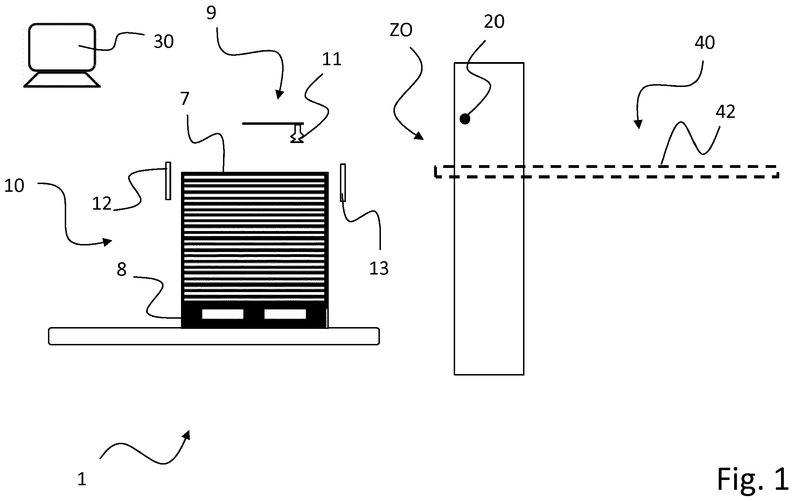

Figur 1 zeigt eine schematische Ansicht einer Ausführungsform einer Vorrichtung 1 und verdeutlicht einen ersten Schritt, wie er bei denkbaren Ausführungsformen des erfindungsgemäßen Verfahrens vorliegen kann. Die Vorrichtung 1 ist vorgesehen zum Separieren einzelner Zwischenlagen 7 von einem Zwischenlagenstapel 10. Die Zwischenlagen 7 sind auf einer Palette 8 angeordnet. Der Zwischenlagenstapel 10 umfasst eine Vielzahl an Zwischenlagen 7.

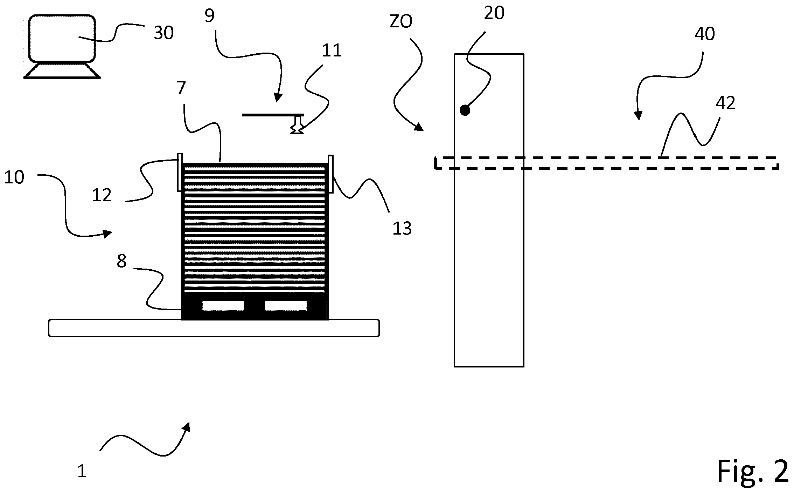

Schematisch dargestellt ist eine Saug- und/oder Greifeinrichtung 9, welche über den Zwischenlagenstapel 10 in die in Figur 1 gezeigte Position verfahren wurde. Bewegt bzw. verfahren wird die Saug- und/oder Greifeinrichtung 9 unter Zuhilfenahme eines Aktors, der in den Figuren vorliegender Patentanmeldung nicht mit dargestellt ist und mit einer Steuerungseinrichtung 30 in Verbindung steht. Über die Saug- und/oder Greifeinrichtung 9 kann die jeweilige zuoberst auf dem Zwischenlagenstapel 10 angeordnete Zwischenlage 7 erfasst, vom Zwischenlagenstapel 10 abgezogen und in Richtung eines Zielortes ZO bewegt werden. Die einzelnen Schritte vom Erfassen der zuoberst auf dem Zwischenlagenstapel 10 angeordneten Zwischenlage 7 über ihre Bewegung in Richtung des Zielortes ZO werden unter Zuhilfenahme der folgenden Figuren 2 bis 10 noch detailliert beschrieben.

Figur 1 lässt darüber hinaus zwei Anschläge 12 und 13 erkennen, die zur vorder-und rückbündigen Ausrichtung mehrerer zuoberst auf dem Zwischenlagenstapel 10 positionierter Zwischenlagen 7 ausgebildet sind. Hierzu können die Anschläge 12 und 13 eine Zustellbewegung ausführen, bei welcher die Anschläge 12 und 13 mit den Vorderkanten und Rückkanten mehrerer auf dem Zwischenlagenstapel 10 angeordneter Zwischenlagen 7 in Kontakt treten. Sind sämtliche Zwischenlagen 7 vom Zwischenlagenstapel 10 entnommen, so kann die Palette 8 durch eine neue Palette ersetzt werden, auf welcher ein neuer Zwischenlagenstapel 10 mit einer Vielzahl an Zwischenlagen 7 angeordnet ist.

Im Bereich des Zielortes ZO sind zudem mehrere Klemmelemente 20 angeordnet, von welchen Figur 1 ein Klemmelement 20 erkennen lässt. Die Ausgestaltung des Klemmelementes 20 sowie seine denkbare Funktion sind ebenso in den nachfolgenden Figuren beschrieben. Weiter ist ein Übergabetisch 40 mit horizontaler Auflage 42 dargestellt, auf dessen Funktion ebenso in den nachfolgenden Figuren Bezug genommen wird.

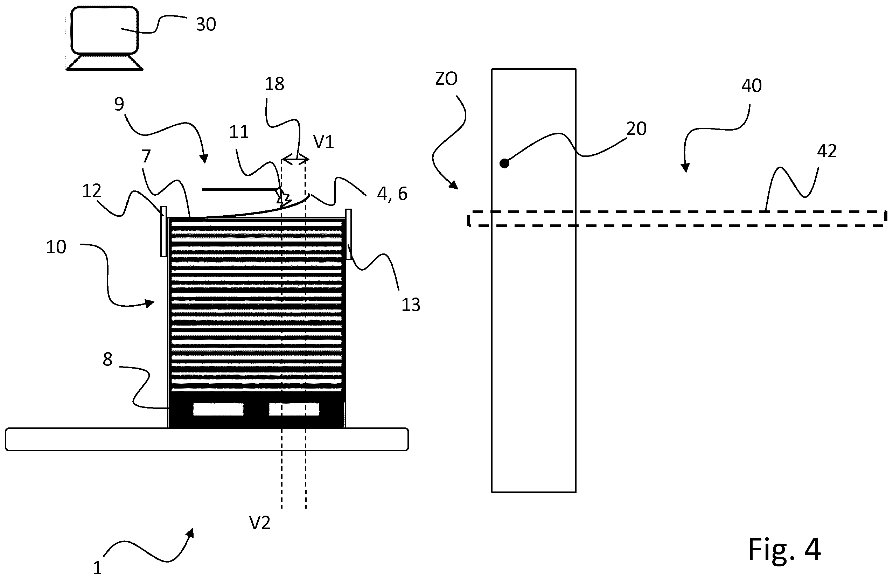

Figur 2 zeigt die Ausführungsform einer Vorrichtung 1 aus Figur 1 und verdeutlicht einen weiteren Schritt einer Ausführungsform eines erfindungsgemäßen Verfahrens. Die Anschläge 12 und 13 haben nun eine Zustellbewegung ausgeführt. Der Anschlag 13 steht mit Vorderkanten 6 (vgl. Figur 4) mehrerer Zwischenlagen 7 in Oberflächenkontakt, während der Anschlag 12 mit Rückkanten mehrerer Zwischenlagen 7 in Oberflächenkontakt steht. Die Vorderkanten 6 und die Rückkanten dieser Zwischenlagen 7 sind daher bündig zueinander ausgerichtet. Vorstellbar ist auch, dass mehrere Zwischenlagenstapel 10 nebeneinander und im Hinblick auf die Figuren 1 bis 10 der Patentanmeldung in Richtung der Bildebene benachbart angeordnet sind. Die Zwischenlagen 7 können hierbei als Halblagen ausgebildet sein. Die Anschläge 12 und 13 können zeitgleich mit Zwischenlagen 7 mehrerer Zwischenlagenstapel 10 in Kontakt treten und diese Zwischenlagen 7 des jeweiligen Zwischenlagenstapels 10 bündig zueinander ausrichten. Sind mehrere benachbarte Zwischenlagenstapel 10 vorgesehen, so kann jedem dieser Zwischenlagenstapel 10 mindestens eine eigene Saug- und/oder Greifeinrichtung 9 zugeordnet sein, welche zuoberst auf dem jeweiligen Zwischenlagenstapel 10 angeordnete Zwischenlagen 7 abzieht und in Richtung des Zielortes ZO bewegt.

Die beiden Anschläge 12 und 13 stehen mit einem nicht dargestellten Aktor in Verbindung, welcher die Bewegung bzw. Zustellbewegung der Anschläge 12 und 13 bewirkt. Der Aktor wird über die Steuerungseinrichtung 30 angesteuert.

Figur 2 zeigt darüber hinaus in Zusammenschau mit Figur 1 eine unveränderte Position der Saug- und/oder Greifeinrichtung 9. Die Zustellbewegung der Anschläge 12 und 13 erfolgt daher zeitlich vor Erfassung einer zuoberst auf dem Zwischenlagenstapel 10 angeordneten Zwischenlage 7.

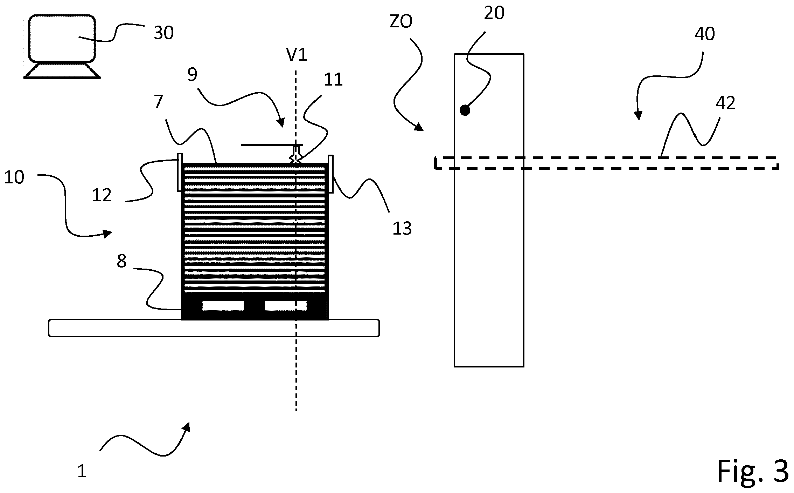

Figur 3 zeigt die Ausführungsform einer Vorrichtung 1 aus den Figuren 1 und 2 und verdeutlicht einen weiteren Schritt einer Ausführungsform eines erfindungsgemäßen Verfahrens. Die Saug- und/oder Greifeinrichtung 9 wurde nun aus der in Figur 2 gezeigten Position, bei welcher die Saug- und/oder Greifeinrichtung 9 beabstandet zum Zwischenlagenstapel 10 und oberhalb des Zwischenlagenstapels 10 angeordnet ist, in die Position aus Figur 3 entlang der vertikal verlaufenden Achse V1 abgesenkt. Die Saug-und/oder Greifeinrichtung 9 besitzt zwei Saugköpfe 11, von welchen in Figur 3 ein Saugkopf 11 zu erkennen ist. Der weitere Saugkopf 11 ist fluchtend zum Saugkopf 11 in Richtung der Bildebene positioniert. Über die Saugköpfe 11 kann die Saug- und/oder Greifeinrichtung 9 nach Absenken in die in Figur 3 gezeigte Position die zuoberst auf dem Zwischenlagenstapel 10 angeordnete Zwischenlage 7 pneumatisch und via Unterdruck fixieren. Hierauf ist die zuoberst auf dem Zwischenlagenstapel 10 angeordnete Zwischenlage 7 mit der Saug- und/oder Greifeinrichtung 9 verbunden. Die Anschläge 12 und 13 bleiben auch während einer Erfassung der zuoberst auf dem Zwischenlagenstapel 10 angeordneten Zwischenlage 7 zugestellt und verharren in Oberflächenkontakt mit den Vorderkanten 6 (vgl. Figur 4) und Rückkanten mehrerer Zwischenlagen 7 des Zwischenlagenstapels 10.

Die Aktoren, welche die Bewegung der Saug- und/oder Greifeinrichtung 9 vorgeben, werden zum Absenken der Saug- und/oder Greifeinrichtung 9 auf den Zwischenlagenstapel 10 durch die Steuerungseinrichtung 30 betätigt. Sämtliche Schritte, wie sie in den Figuren 1 bis 10 vorliegender Patentanmeldung gezeigt sind, werden durch die Steuerungseinrichtung 30 vorgegeben bzw. durch die Steuerungseinrichtung 30 initiiert.

Figur 4 zeigt die Ausführungsform einer Vorrichtung 1 aus den Figuren 1 bis 3 und verdeutlicht einen weiteren Schritt einer Ausführungsform eines erfindungsgemäßen Verfahrens. Eine Zusammenschau der Figuren 3 und 4 lässt hierbei erkennen, dass eine Außenkante 4 bzw. Vorderkante 6 der zuoberst auf dem Zwischenlagenstapel 10 angeordneten Zwischenlage 7 durch die Saug- und/oder Greifeinrichtung 9 vom Zwischenlagenstapel 10 angehoben wurde. Zum Anheben der Außenkante 4 bzw. Vorderkante 6 wurde die Saug- und/oder Greifeinrichtung 9 in Richtung weg des Zwischenlagenstapels 10 nach oben verfahren und um eine horizontale und in Richtung der Bildebene verlaufende Achse V1 gedreht. Zeitgleich hat die Saug- und/oder Greifeinrichtung 9 einen Versatz 18 in Gegenrichtung des Zielortes ZO ausgeführt. Die drehende Bewegung der Saug- und/oder Greifeinrichtung 9 um die horizontale Achse, das Anheben der Saug- und/oder Greifeinrichtung 9 in Richtung weg des Zwischenlagenstapels 10 und nach oben sowie der Versatz 18 in Gegenrichtung des Zielortes ZO finden zeitgleich statt. Durch die drehende Bewegung der Saug- und/oder Greifeinrichtung 9 bzw. der Saufköpfe 11, welche zeitgleich mit einem Versatz 18 und einem anheben der Saug- und/oder Greifeinrichtung 9 in Richtung weg des Zwischenlagenstapels 10 nach oben einhergeht, kann die zuoberst auf dem Zwischenlagenstapel 10 angeordnete Zwischenlage 7 effektiv von weiteren Zwischenlagen 7 des Zwischenlagenstapels 10 getrennt werden. Das Drehen der Saug-und/oder Greifeinrichtung 9, ihr Verfahren nach oben und in Richtung weg des Zwischenlagenstapels 10 sowie der Versatz 18 werden durch die Steuerungseinrichtung 30 initiiert.

Der zur rückbündigen Ausrichtung von Zwischenlagen 7 des Zwischenlagenstapels 10 vorgesehene Anschlag 12 bleibt auch bei Anheben der Außenkante 4 bzw. Vorderkante 6 zugestellt. Die erfasste Zwischenlage 7 wird bei Anheben konvex verformt bzw. gekrümmt, wodurch eine Adhäsion und/oder ein mechanisches Verhaken der erfassten Zwischenlage 7 an weiteren Zwischenlagen 7 des Zwischenlagenstapels 10 ggf. gelöst werden kann.

Auch der zur vorderbündigen Ausrichtung von Zwischenlagen 7 des Zwischenlagenstapels 10 vorgesehen Anschlag 13 bleibt bei Anheben der Außenkante 4 bzw. Vorderkante 6 zugestellt und überragt den Zwischenlagenstapel 10 in vertikaler Richtung. Hierdurch kann die Zwischenlage 7 bei Abziehen vom Zwischenlagenstapel 10, wie nachfolgend noch beschrieben, durch den zur vorderbündigen Ausrichtung vorgesehen Anschlag 13 gestützt werden.

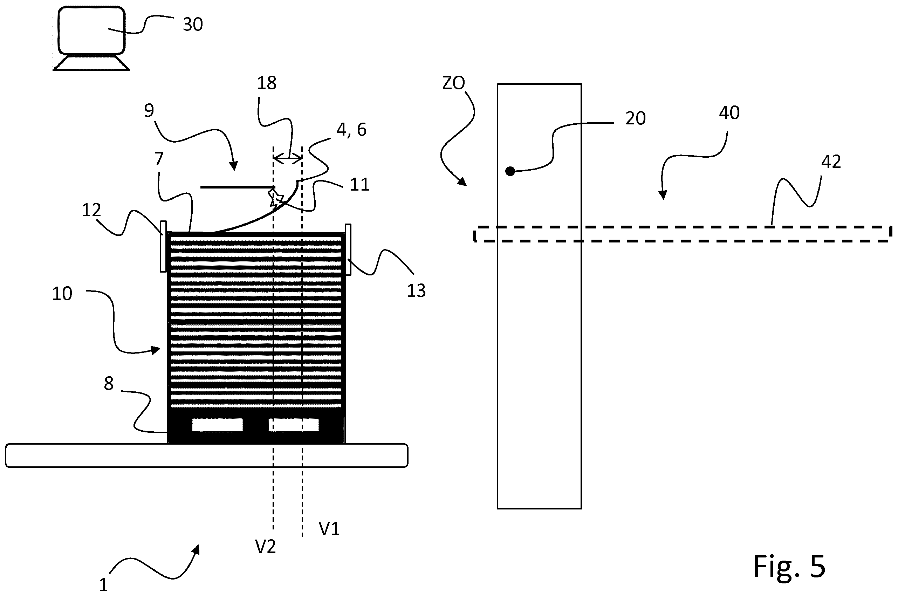

Figur 5 zeigt die Ausführungsform einer Vorrichtung 1 aus den Figuren 1 bis 4 und verdeutlicht einen weiteren Schritt einer Ausführungsform eines erfindungsgemäßen Verfahrens. Ausgehend von der Position aus Figur 4 wurde die Saug- und/oder Greifeinrichtung 9 bzw. wurden die Saugköpfe 11 nicht weiter gedreht. Die Drehposition aus Figur 4 wurde beibehalten. Auch wurde die Saug- und/oder Greifeinrichtung 9 bzw. wurden die Saugköpfe 11 ausgehend von der Position aus Figur 4 nicht weiter in Gegenrichtung des Zielortes ZO versetzt. Figur 5 lässt jedoch erkennen, dass die Saug-und/oder Greifeinrichtung 9 ohne weiteren Versatz 18 und ohne weiteres Drehen um eine horizontale Achse in Richtung weg des Zwischenlagenstapels 10 angehoben wurde. Die Drehposition und der Versatz 18 gemäß Figur 4 werden somit bei weiterem Anheben der Saug- und/oder Greifeinrichtung 9 in Richtung weg des Zwischenlagenstapels 10 beibehalten. Die Saug- und/oder Greifeinrichtung 9 verfährt hierbei auf ein bestimmtes Höhenniveau, um die Zwischenlage 7 vom Zwischenlagenstapel 10 abziehen und an die Klemmelemente 20 übergeben zu können. Die Zwischenlage 7 ist weiterhin konvex verformt bzw. gekrümmt und steht mit dem Anschlag 12 in Oberflächenkontakt, welcher zur rückbündigen Ausrichtung mehrerer Zwischenlagen 7 des Zwischenlagenstapels 10 vorgesehen ist. Die Anschläge 12 und 13 bleiben weiterhin zugestellt.

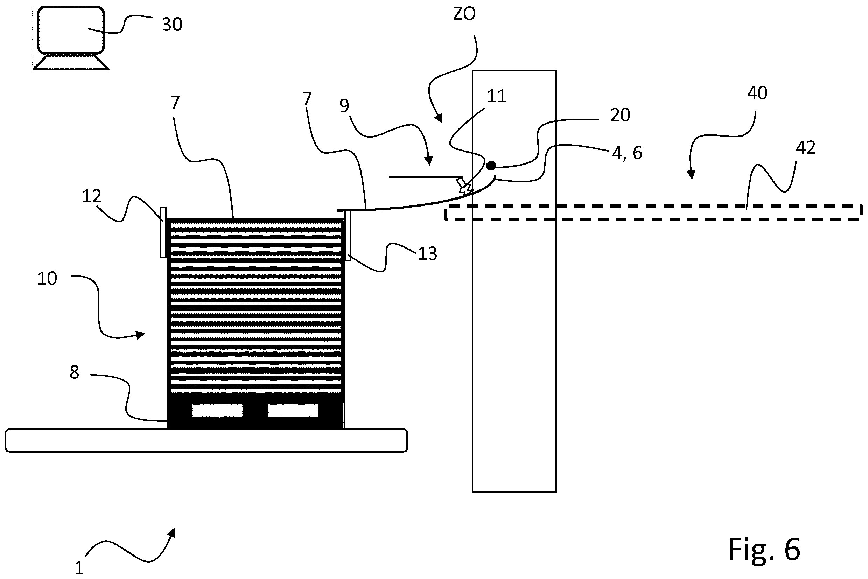

Figur 6 zeigt die Ausführungsform einer Vorrichtung 1 aus den Figuren 1 bis 5 und verdeutlicht einen weiteren Schritt einer Ausführungsform eines erfindungsgemäßen Verfahrens. Hat die Saug- und/oder Greifeinrichtung 9 ein bestimmtes Höhenniveau erreicht, wird die Saug- und/oder Greifeinrichtung 9 zusammen mit der erfassten Zwischenlage 7 in Richtung des Zielortes ZO bewegt, ohne hierbei weiter angehoben und/oder abgesenkt zu werden. Die Bewegung der Saug- und/oder Greifeinrichtung 9 erfolgt nach Anheben der Außenkante 4 bzw. Vorderkante 6 demnach horizontal. Da der zur vorderbündigen Ausrichtung von Zwischenlagen 7 vorgesehen Anschlag 13 den Zwischenlagenstapel 10 vertikal überragt, kann die durch die Saug- und/oder Greifeinrichtung 9 erfasste Zwischenlage 7 bei Abziehen vom Zwischenlagenstapel 10 gleitend über den Anschlag 13 hinwegbewegt werden. Der Anschlag 13 erleichtert somit eine Bewegung der erfassten Zwischenlage 7 in Richtung des Zielortes ZO. Beide Anschläge 12 und 13 sind weiterhin zugestellt, bis die Zwischenlage 7 ihren Kontakt zum Zwischenlagenstapel 10 vollständig verliert. Die Saug- und/oder Greifeinrichtung 9 bzw. die Saugköpfe 11 sind noch gedreht bzw. behalten weiterhin ihre bereits während eines Anhebens der Au ßenkante 4 bzw. Vorderkante 6 ausgebildete Drehposition bei.

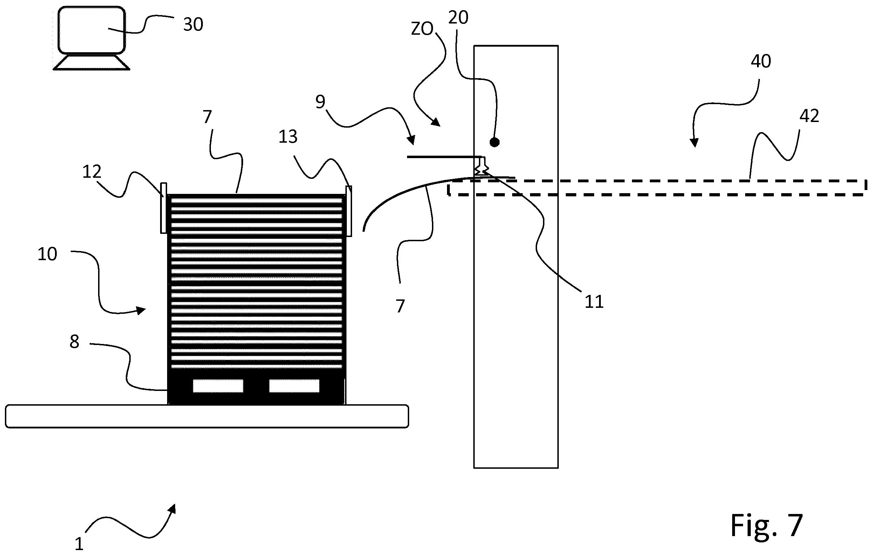

Figur 7 zeigt die Ausführungsform einer Vorrichtung 1 aus den Figuren 1 bis 6 und verdeutlicht einen weiteren Schritt einer Ausführungsform eines erfindungsgemäßen Verfahrens. Die Saug- und/oder Greifeinrichtung 9 hat nun ihren Zielort ZO erreicht, so dass die Klemmelemente 20, von welchen in den Figuren vorliegender Patentanmeldung ein Klemmelement 20 zu erkennen ist, die Zwischenlage 7 von der Saug- und/oder Greifeinrichtung 9 entgegennehmen können. Die Zwischenlage 7 wird hierzu von der Saug- und/oder Greifeinrichtung 9 kraftbeaufschlagt gegen einen Übergabetisch 40 gedrückt und liegt somit hängend auf dem Übergabetisch 40 auf. Die Saugköpfe 11 der Saug- und/oder Greifeinrichtung 9 wurden zum Kontakt der Zwischenlage 7 mit dem Übergabetisch 40 in die in Figuren 1 bis 3 gezeigte Position zurückgedreht. Es ist hierbei denkbar, dass die Saug- und/oder Greifeinrichtung 9 zur Übergabe der Zwischenlage 7 an die Klemmelemente 20 abgesenkt wird. In weiteren Ausführungsformen wird die Saug-und/oder Greifeinrichtung 9 bzw. werden die Saufköpfe 11 der Saug- und/oder Greifeinrichtung 9 lediglich gedreht um die Zwischenlage 7 auf dem Übergabetisch 40 platzieren und an die Klemmelemente 20 weitergeben zu können.

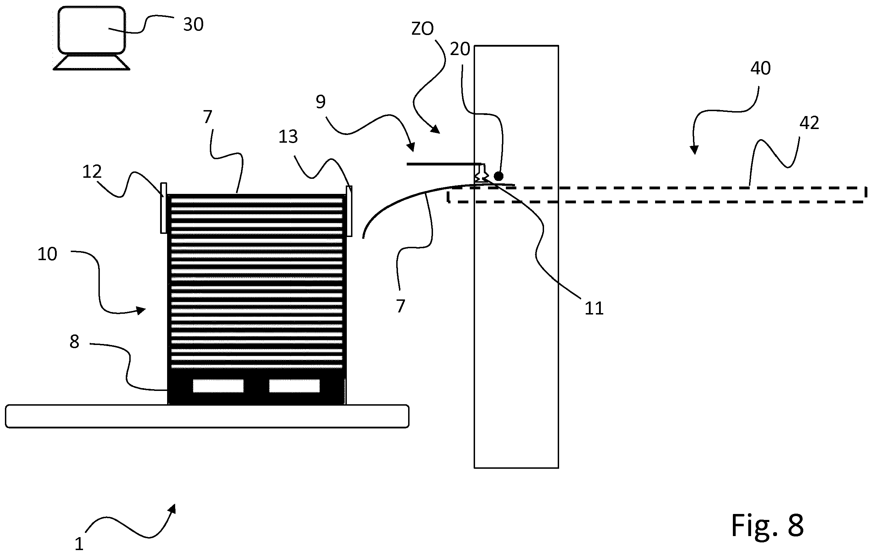

Figur 8 zeigt die Ausführungsform einer Vorrichtung 1 aus den Figuren 1 bis 7 und verdeutlicht einen weiteren Schritt einer Ausführungsform eines erfindungsgemäßen Verfahrens. Die Klemmelemente 20 wurden nun in Richtung der auf dem Übergabetisch 40 angeordneten Zwischenlage 7 abgesenkt und greifen die Zwischenlage 7. Die pneumatische Fixierung der Zwischenlage 7 an den Saugköpfen 11 bzw. an der mindestens einen Saug- und/oder Greifeinrichtung 9 ist nun aufgehoben. Die hängend auf dem Übergabeplatz 40 angeordnete Zwischenlage 7 wird via die Klemmelemente 20 gehalten.

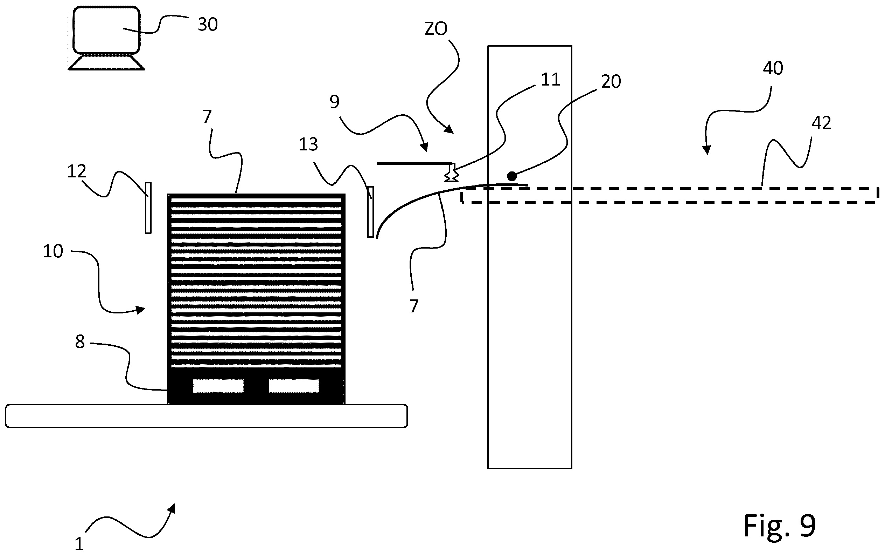

Figur 9 zeigt die Ausführungsform einer Vorrichtung 1 aus den Figuren 1 bis 8 und verdeutlicht einen weiteren Schritt einer Ausführungsform eines erfindungsgemäßen Verfahrens. Da die pneumatische Fixierung der Zwischenlage 7 an der Saug- und/oder Greifeinrichtung 9 bzw. an den Saugköpfen 11 aufgehoben ist, kann die Saug- und/oder Greifeinrichtung 9 zum Erfassen einer weiteren Zwischenlage 7 vom Zwischenlagenstapel 10 in Richtung des Zwischenlagenstapels 10 zurückbewegt werden. Die auf dem Übergabetisch 40 aufliegende Zwischenlage 7 wird weiterhin über die Klemmelemente 20 gehalten.

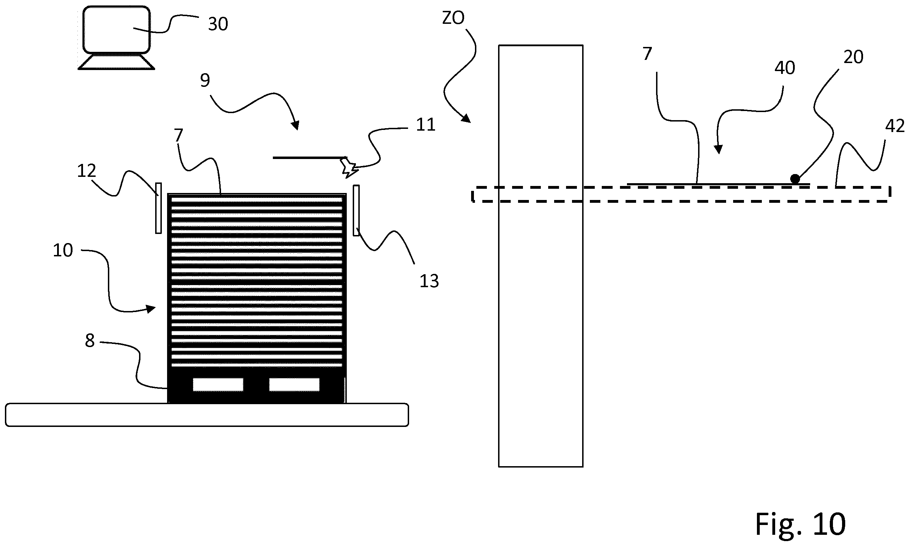

Es besteht die Möglichkeit, dass Zwischenlagen 7 des Zwischenlagenstapels 10 bei Abziehen einer Zwischenlage 7 vom Zwischenlagenstapel 10 deorientiert werden bzw. verrutschen. Um mehrere obere Zwischenlagen 7 des Zwischenlagenstapels 10 bündig auszurichten, werden die Anschläge 12 und 13, wie in Figur 9 gezeigt, bei einer Bewegung der Saug- und/oder Greifeinrichtung 9 vom Zielort ZO in Richtung des Zwischenlagenstapels 10 auseinandergefahren und anschließend wieder zugestellt (vgl. Figur 10). Der Abstand der Anschläge 12 und 13 zueinander wird während des Auseinanderfahrens vergrößert.

Figur 10 zeigt die Ausführungsform einer Vorrichtung 1 aus den Figuren 1 bis 9 und verdeutlicht einen weiteren Schritt einer Ausführungsform eines erfindungsgemäßen Verfahrens. Die Klemmelemente 20 ziehen nun die von der Saug- und/oder Greifeinrichtung 9 übergebene Zwischenlage 7 in Richtung einer horizontalen Auflage 42 des Übergabetisches 40. Von dort wird die Zwischenlage 7 von einer in den Figuren vorliegender Patentanmeldung nicht mit dargestellten Handhabungseinrichtung entgegengenommen und auf mehreren Artikeln einer Palette abgesetzt, wobei sie eine Standebene für weitere Artikel bereitstellt. Figur 10 lässt darüber hinaus erkennen, dass die Anschläge 12 und 13 zur vorder- und rückbündigen Ausrichtung mehrerer Zwischenlagen 7 des Zwischenlagenstapels 10 bereits eine Zustellbewegung ausführen bzw. dass der Abstand der Anschläge 12 und 13 zueinander gegenüber der Position aus Figur 9 verringert wird. Die Saug- und/oder Greifeinrichtung 9 wird weiter verfahren, bis sie in die in Figur 1 gezeigte Position gelangt und vollständig oberhalb des Zwischenlagenstapels 10 positioniert wird. Sodann kann die Saug- und/oder Greifeinrichtung 9, wie zu Figur 3 bereits beschrieben, erneut auf den Zwischenlagenstapel 10 abgesenkt werden und eine weitere Zwischenlage 7 erfassen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Vorrichtung
- 4: Außenkante
- 6: Vorderkante
- 7: Zwischenlage
- 8: Palette
- 9: Saug- und/oder Greifeinrichtung
- 10: Zwischenlagenstapel
- 11: Saugkopf
- 12: Anschlag
- 13: Anschlag
- 18: Versatz
- 20: Klemmelement
- 30: Steuerungseinrichtung
- 40: Übergabetisch
- 42: Horizontale Auflage
- ZO: Zielort
- V1: vertikale Achse

## Patentansprüche

1. Verfahren zum Separieren einzelner Zwischenlagen (7) von einem Zwischenlagenstapel (10), umfassend folgende Schritte:
- Erfassen einer zuoberst auf dem Zwischenlagenstapel (10) angeordneten Zwischenlage (7) durch mindestens eine Saug- und/oder Greifeinrichtung (9),
- Anheben einer Außenkante (4) der erfassten Zwischenlage (7) durch die mindestens eine Saug- und/oder Greifeinrichtung (9), wobei die Zwischenlage (7) weiterhin mit dem Zwischenlagenstapel (10) in Oberflächenkontakt bleibt,
- Abziehen der angehobenen Zwischenlage (7) vom Zwischenlagenstapel (10) durch eine Bewegung der mindestens einen Saug- und/oder Greifeinrichtung (9) in Richtung eines Zielortes (ZO), wobei die Zwischenlage (7) ihren Oberflächenkontakt zum Zwischenlagenstapel (10) verliert, und wobei
- die mindestens eine Saug- und/oder Greifeinrichtung (9) zeitlich nach Erfassen der Zwischenlage (7) und zeitlich vor Abziehen der Zwischenlage (7) einen Versatz (18) um eine bestimmte Strecke erfährt und sich hierbei in Gegenrichtung des Zielortes (ZO) bewegt, und bei welchem Verfahren vorgesehen ist, dass
- die mindestens eine Saug- und/oder Greifeinrichtung (9) zum Anheben der Außenkante (4) der Zwischenlage (7) um eine zumindest näherungsweise horizontal orientierte Achse gedreht wird und bei Anheben einer Außenkante (4) der erfassten Zwischenlage (7) in Richtung nach oben vom Zwischenlagenstapel (10) weg bewegt wird, wobei vorgesehen ist, dass
- das Drehen der Saug- und/oder Greifeinrichtung (9), der Versatz (18) der Saug-und/oder Greifeinrichtung (9) und/oder die Bewegung der mindestens einen Saug-und/oder Greifeinrichtung (9) in Richtung nach oben sich zeitlich überschneiden, so dass die mindestens eine Saug- und/oder Greifeinrichtung (9) bei Anheben der Außenkante (4) der erfassten Zwischenlage (7) einer Bewegungsbahn mit nicht kreisrundem Verlauf folgt und bei welchem Verfahren vorgesehen ist, dass
- zeitlich vor Anheben der Außenkante (4) wenigstens zwei Anschläge (12, 13) zur vorder- und rückbündigen Ausrichtung mehrerer zuoberst auf dem Zwischenlagenstapel (10) angeordneter Zwischenlagen (7) zugestellt werden und hierbei mit gegenüberliegenden Außenkanten (4) der Zwischenlagen (7) in Oberflächenkontakt treten, dass
- wenigstens ein zur rückbündigen Ausrichtung der Zwischenlagen (7) vorgesehener Anschlag (12) während des Anhebens der Außenkante (4) in Oberflächenkontakt mit einer Rückkante der erfassten Zwischenlage (7) bleibt und dass
- ein zur vorderbündigen Ausrichtung der Zwischenlagen (7) vorgesehener Anschlag (13) den Zwischenlagenstapel (10) in vertikaler Richtung überragt, so dass die jeweilige Zwischenlage (7) während des Abziehens gleitend über den zur vorderbündigen Ausrichtung vorgesehenen Anschlag (13) hinwegbewegt wird.

2. Verfahren nach Anspruch 1, bei welchem die mindestens eine Saug- und/oder Greifeinrichtung (9) die zuoberst auf dem Zwischenlagenstapel (10) angeordnete Zwischenlage (7) pneumatisch erfasst.

3. Verfahren nach Anspruch 1 oder Anspruch 2, bei welchem wenigstens zwei Saug-und/oder Greifeinrichtungen (9) vorhanden sind, die jeweils eine zuoberst auf einem jeweils zugeordneten Zwischenlagenstapel (10) angeordnete Zwischenlage (7) erfassen, nachfolgend zumindest näherungsweise zeitsynchron jeweils einen Versatz (18) erfahren und sich hierbei jeweils mit bestimmter Strecke in Gegenrichtung des Zielortes (ZO) bewegen.

4. Verfahren nach einem der Ansprüche 1 bis 3, bei welchem im Bereich des Zielortes (ZO) eine Palette (8) positioniert ist, wobei die Zwischenlage (7) durch die mindestens eine Saug- und/oder Greifeinrichtung (9) auf eine Vielzahl von Artikel aufgelegt wird und hierbei eine Standfläche für weitere Artikel ausbildet.

5. Verfahren nach einem der Ansprüche 1 bis 4, bei welchem im Bereich des Zielortes (ZO) ein Übergabetisch (40) und/oder Auflagetisch mit horizontaler Auflagefläche ausgebildet ist, auf welchem die Zwischenlage (7) positioniert wird.

6. Verfahren nach einem der Ansprüche 1 bis 5, bei welchem die Saug- und/oder Greifeinrichtung (9) bei Abziehen der bereits angehobenen Zwischenlage (7) horizontal bewegt wird, ohne vertikal angehoben und/oder vertikal abgesenkt zu werden.

7. Verfahren nach einem der Ansprüche 1 bis 6, bei welchem die mindestens eine Saug-und/oder Greifeinrichtung (9) bei Abziehen der Zwischenlage (7) vom Zwischenlagenstapel (10) ihre nach Anheben der Außenkante (4) der Zwischenlage (7) eingenommene Drehposition beibehält.

## Claims

1. A method for separating individual intermediate layers (7) from a stack (10) of intermediate layers, comprising the following steps
- gripping an intermediate layer (7), which is arranged uppermost at the top of the stack (10) of intermediate layers, by at least one suction and/or gripping device (9),
- raising an outer edge (4) of the gripped intermediate layer (7) by the at least one suction and/or gripping device (9), whereby the intermediate layer (7) furthermore remains in surface contact with the stack (10) of intermediate layers,
- pulling off the raised intermediate layer (7) from the stack (10) of intermediate layers by a movement of the at least one suction and/or gripping device (9) in the direction of a target location (ZO), wherein the intermediate layer (7) loses its surface contact with the stack (10) of intermediate layers, and wherein
- temporally after gripping the intermediate layer (7) and temporally before the intermediate layer (7) is pulled off, the at least one suction and/or gripping device (9) undergoes an offset (18) by a certain distance, thereby moving in the opposite direction to the target location (ZO), and in which method it is provided that
- the at least one suction and/or gripping device (9) for raising the outer edge (4) of the intermediate layer (7) is rotated about an at least approximately horizontally oriented axis and, when an outer edge (4) of the gripped intermediate layer (7) is raised, the suction and/or gripping device (9) is moved in the upward direction away from the stack (10) of intermediate layers, wherein it is provided that
- the rotation of the suction and/or gripping device (9), the offset (18) of the suction and/or gripping device (9) and/or the upward movement of the at least one suction and/or gripping device (9) temporally overlap, so that when the outer edge (4) of the gripped intermediate layer (7) is raised, the at least one suction and/or gripping device (9) follows a path of movement with a non-circular course, and in which method it is provided that
- temporally before the outer edge (4) is raised, at least two stops (12, 13) for rear-flush alignment and front-flush alignment of a plurality of intermediate layers (7), which intermediate layers (10) are arranged uppermost at the top of the stack (10) of intermediate layers, are advanced towards each other, thereby coming into surface contact with opposite outer edges (4) of the intermediate layers (7), in which
- at least one stop (12) provided for the rear-flush alignment of the intermediate layers (7) remains in surface contact with a rear edge of the gripped intermediate layer (7) during the raising of the outer edge (4), and in which
- a stop (13) provided for the front-flush alignment of the intermediate layers (7) projects beyond the stack (10) of intermediate layers in the vertical direction, so that the respective intermediate layer (7) is slidingly moved over the stop (13) provided for the front-flush alignment during the pulling off process.

2. The method as recited in claim 1, in which the at least one suction and/or gripping device (9) pneumatically grips the uppermost intermediate layer (7), which is arranged on top of the stack (10) of intermediate layers.

3. The method as recited in claim 1 or claim 2, in which at least two suction and/or gripping devices (9) are present, which suction and/or gripping devices (9) each grip an intermediate layer (7) arranged at the top of a respectively associated stack (10) of intermediate layers, which suction and/or gripping devices (9) each subsequently undergo an offset (18) at least approximately time-synchronously and hereby each move in opposite direction to the target location (ZO) by a specific distance.

4. The method as recited in one of the claims 1 to 3, in which a pallet (8) is positioned in the region of the target location (ZO), wherein the intermediate layer (7) is placed on a plurality of articles by the at least one suction and/or gripping device (9), thereby forming a base for further articles.

5. The method as recited in one of the claims 1 to 4, in which a transfer table (40) and/or support table with a horizontal support surface is provided in the area of the target location (ZO), on which transfer table (40) and/or support table the intermediate layer (7) is positioned.

6. The method as recited in one of the claims 1 to 5, in which the suction and/or gripping device (9) is moved in a horizontal direction upon pulling off the already raised intermediate layer (7) without the suction and/or gripping device (9) being raised vertically and/or lowered vertically.

7. The method as recited in one of the claims 1 to 6, in which the at least one suction and/or gripping device (9), upon pulling off the intermediate layer (7) from the stack (10) of intermediate layers, retains its rotational position assumed after raising the outer edge (4) of the intermediate layer (7).

## Revendications

1. Procédé destiné à séparer des couches intermédiaires (7) individuelles d'une pile de couches intermédiaires (10), comprenant les étapes suivantes consistant à:
- saisir par l'intermédiaire d'au moins un dispositif d'aspiration et/ou de préhension (9) une couche intermédiaire (7) disposée tout en haut sur la pile de couches intermédiaires (10),
- soulever par l'intermédiaire dudit au moins un dispositif d'aspiration et/ou de préhension (9) un bord extérieur (4) de la couche intermédiaire (7) saisie, dans lequel la couche intermédiaire (7) continue à rester en contact de surface avec la pile de couches intermédiaires (10),
- retirer la couche intermédiaire (7) soulevée de la pile de couches intermédiaires (10) en déplaçant ledit au moins un dispositif d'aspiration et/ou de préhension (9) en direction d'une destination (ZO), dans lequel la couche intermédiaire (7) perd son contact de surface avec la pile de couches intermédiaires (10), et dans lequel
- ledit au moins un dispositif d'aspiration et/ou de préhension (9) subit un décalage (18) d'une certaine distance après que la couche intermédiaire (7) a été saisie et avant que la couche intermédiaire (7) soit retirée, tout en se déplaçant dans le sens opposé de la destination (ZO), et dans lequel procédé il est prévu que,
- pour soulever le bord extérieur (4) de la couche intermédiaire (7), ledit au moins un dispositif d'aspiration et/ou de préhension (9) est tourné autour d'un axe orienté au moins approximativement horizontalement et, lorsqu'il soulève un bord extérieur (4) de la couche intermédiaire (7) saisie, est déplacé vers le haut dans la direction opposée à la pile de couches intermédiaires (10), dans lequel il est prévu que
- la rotation du dispositif d'aspiration et/ou de préhension (9), le décalage (18) du dispositif d'aspiration et/ou de préhension (9) et/ou le déplacement vers le haut dudit au moins un dispositif d'aspiration et/ou de préhension (9) se chevauchent dans le temps de sorte que ledit au moins un dispositif d'aspiration et/ou de préhension (9), lorsqu'il soulève le bord extérieur (4) de la couche intermédiaire (7) saisie, suit une trajectoire de mouvement ayant un tracé non circulaire, et dans lequel procédé il est prévu que,
- avant de soulever le bord extérieur (4), au moins deux butées (12, 13) destinées à aligner une pluralité de couches intermédiaires (7) disposées tout en haut sur la pile de couches intermédiaires (10), de manière à ce qu'elles soient à fleur à l'avant et à l'arrière, sont avancées et, ce faisant, entrent en contact de surface avec des bords extérieurs (4) opposés des couches intermédiaires (7), qu'
- au moins une butée (12) prévue pour aligner les couches intermédiaires (7) de manière à ce qu'elles soient à fleur à l'arrière reste en contact de surface avec un bord arrière de la couche intermédiaire (7) saisie, lorsque le bord extérieur (4) est soulevé, et qu'
- une butée (13) prévue pour aligner les couches intermédiaires (7) de manière à ce qu'elles soient à fleur à l'avant dépasse dans la direction verticale la pile de couches intermédiaires (10) de sorte que la couche intermédiaire (7) respective est déplacée à glissement, pendant qu'elle est retirée, par-dessus ladite butée (13) prévue pour l'alignement affleuré à l'avant.

2. Procédé selon la revendication 1, dans lequel ledit au moins un dispositif d'aspiration et/ou de préhension (9) saisit pneumatiquement la couche intermédiaire (7) disposée tout en haut sur la pile de couches intermédiaires (10).

3. Procédé selon la revendication 1 ou la revendication 2, dans lequel au moins deux dispositifs d'aspiration et/ou de préhension (9) sont présents qui saisissent chacun une couche intermédiaire (7) disposée tout en haut sur une pile de couches intermédiaires (10) respectivement associée, puis subissent, au moins approximativement en synchronisme temporel, un décalage (18) et, se faisant, se déplacent chacun avec une certaine distance dans la direction opposée de la destination (ZO).

4. Procédé selon l'une quelconque des revendications 1 à 3, dans lequel une palette (8) est positionnée au niveau de la destination (ZO), dans lequel la couche intermédiaire (7) est posée par l'intermédiaire dudit au moins un dispositif d'aspiration et/ou de préhension (9) sur une pluralité d'articles, tout en formant une surface de pose pour d'autres articles.

5. Procédé selon l'une quelconque des revendications 1 à 4, dans lequel une table de transfert (40) et/ou une table de dépose ayant une surface de dépose horizontale et sur laquelle la couche intermédiaire (7) est positionnée est formée au niveau de la destination (ZO).

6. Procédé selon l'une quelconque des revendications 1 à 5, dans lequel, lorsque le dispositif d'aspiration et/ou de préhension (9) retire la couche intermédiaire (7) déjà soulevée, il est déplacé horizontalement, sans être soulevé verticalement et/ou être abaissé verticalement.

7. Procédé selon l'une quelconque des revendications 1 à 6, dans lequel, lorsque ledit au moins un dispositif d'aspiration et/ou de préhension (9) retire la couche intermédiaire (7) de la pile de couches intermédiaire (10), il maintient sa position de rotation occupée après avoir soulevé le bord extérieur (4) de la couche intermédiaire (7).
